Europäisches Patentamt

European Patent Office

Office européen des brevets

(19)

(11) Numéro de publication: **0 211 128**
**B1**

(12) **FASCICULE DE BREVET EUROPEEN**

(45) Date de publication du fascicule du brevet:
**20.12.89**

(51) Int. Cl.⁴: **B23Q 11/10**

(21) Numéro de dépôt: **85810359.1**

(22) Date de dépôt: **05.08.85**

(54) Support des outils d'un tour automatique avec dispositif d'arrosage de ces outils.

(43) Date de publication de la demande:
**25.02.87 Bulletin 87/9**

(45) Mention de la délivrance du brevet:
**20.12.89 Bulletin 89/51**

(84) Etats contractants désignés:
**CH DE FR GB IT LI**

(56) Documents cités:
**EP-A- 0 050 179**
**CH-A- 109 534**
**CH-A- 337 703**
**DE-C- 165 108**
**DE-U- 7 142 071**
**FR-A- 1 279 749**
**US-A- 3 176 330**

(73) Titulaire: **Habegger, Harold, Sous Graitery 10,**
**CH-2738 Court(CH)**

(72) Inventeur: **Habegger, Harold, Sous Graitery 10,**
**CH-2738 Court(CH)**

(74) Mandataire: **Tordion, Serge, c/o ASUAG-SSIH**
**Département brevets et licences Faubourg du Lac 6,**
**CH-2501 Bienne(CH)**

ACTORUM AG

## Description

L'objet de la présente invention est un support des outils d'un tour automatique avec dispositif d'arrosage de ces outils, ce support ayant la forme d'un bloc solide et rigide, présentant, d'une part, un alésage dans lequel est fixé un canon de guidage pour une barre de matière, et, d'autre part, des alésages disposés en éventail pour guider perpendiculairement à l'axe du canon de guidage des coulisseaux cylindriques auxquels sont fixés des outils afin d'usiner des pièces à l'extrémité de la barre de matière, et comprenant un dispositif d'arrosage de la place de travail des outils.

Un support d'outils de ce type est connu (EP-A 0 050 179). Bien que ce document n'en fasse pas mention, un dispositif d'arrosage conventionnel, formé par des tuyaux indépendants, lui est nécessairement associé.

Si leur agencement est aisé pour le fabricant de ces tours, les utilisateurs souffrent, en revanche, de leurs inconvénients, entre autres de leur manque de stabilité. Il arrive, en effet, que la pression du liquide d'arrosage déplace progressivement l'extrémité de ces tuyaux au point qu'à la longue, le jet de liquide d'arrosage passerait à côté de la place de travail des outils du tour, si la position de ces tuyaux n'était pas corrigée entretemps. De plus, comme ces tuyaux doivent déboucher à proximité de cette place de travail pour éviter une dispersion indésirable du liquide d'arrosage, il arrive que des copeaux s'entortillent autour de ces tuyaux, ce qui, à la longue, peut perturber le travail des outils et produire néanmoins la dispersion du liquide d'arrosage. L'utilisateur ne peut donc pas laisser longtemps sans surveillance les tours équipés des dispositifs d'arrosage connus. Les tuyaux de ces dispositifs augmentent encore l'encombrement de la place de travail au point qu'il faut parfois les écarter lors de la mise en train et les régler à nouveau avant de faire démarrer le travail du tour.

On connaît aussi des dispositifs d'arrosage qui amènent le liquide directement sur l'arête de coupe de chaque outil en le faisant passer à travers une conduite aménagée dans un ou plusieurs corps rigides, soit en partie dans l'outil lui-même (FR-A 1 279 749, US-A 3 176 330) soit dans le porte-outil (DE-U 7 142 071), c'est-à-dire l'organe du tour auquel l'outil est fixé directement.

Comme aussi bien un tel porte-outil que l'outil lui-même se déplacent pendant le travail, la conduite qui est aménagée dans ceux-ci doit nécessairement être raccordée au réservoir du liquide d'arrosage, qui, lui, est fixe, par un tube souple en déplacement constant, avec tous les inconvénients que cela peut entraîner (vieillissement, porosité, craquelures, risque d'accrochage par des éléments externes). De plus, une conduite et un tube souple doivent être prévus pour chaque outil du tour, ce qui complique la fabrication et l'aménagement de ces éléments, sans compter l'encombrement qui en résulte.

La présente invention vise à pallier les défauts susmentionnés dans le cas des supports définis par le préambule de la revendication 1. Les caractéristiques de cette revendication atteignent manifestement ce but. Une déviation des jets de liquide d'arrosage en cours de travail est radicalement exclue. Les canaux forés dans le bloc supportant les outils et le canon de guidage du tour n'offrent aucune prise aux copeaux. En outre, si ce bloc est fixe, les conduites aménagées en son sein peuvent être reliées au réservoir du liquide d'arrosage par des conduites rigides, manifestement exemptes des défauts inhérents des conduites souples, de plus en déplacement constant. Il en est de même dans le cas d'un bloc monté coulissant sur le bâti du tour, si le réservoir du liquide d'arrosage en est rendu solidaire. Vu la ramification de la ou des conduites du liquide d'arrosage, il est possible de projeter un jet de liquide sur plusieurs outils à partir seulement d'une ou de deux entrées dans leur support, ce qui a aussi pour effet, d'une part, de simplifier le raccordement au réservoir de liquide, et, d'autre part, d'envoyer une multitude de jets dans plusieurs directions vers la pièce en travail, en garantissant ainsi de la débarrasser complètement des copeaux. Enfin, les forures constituant l'ensemble des canaux du dispositif d'arrosage n'augmentent en aucune façon l'encombrement de la place de travail du tour et ne gênent nullement sa mise en train.

Une forme d'exécution du support selon l'invention est représentée schématiquement et à simple titre d'exemple non limitatif au dessin dans lequel:

    la Fig. 1 en est une vue en élévation;
    la Fig. 2 une coupe, et
    la Fig. 3 une vue en perspective.

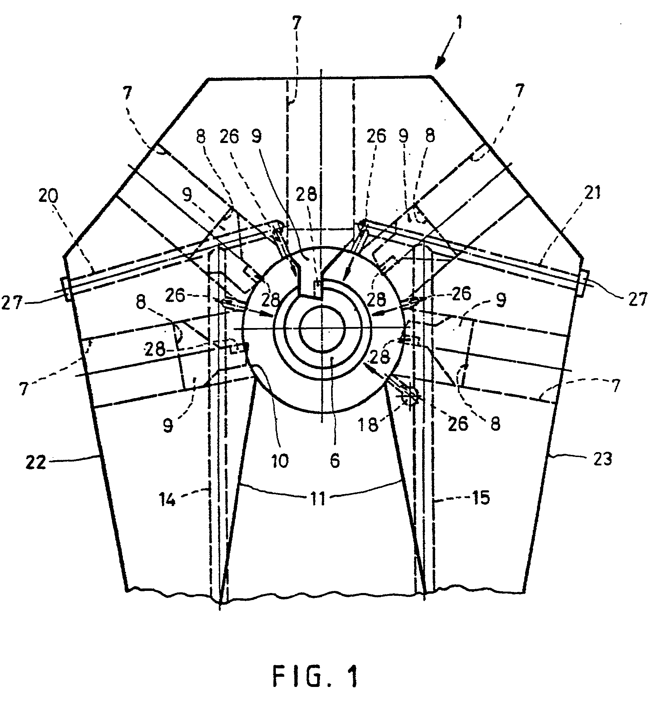

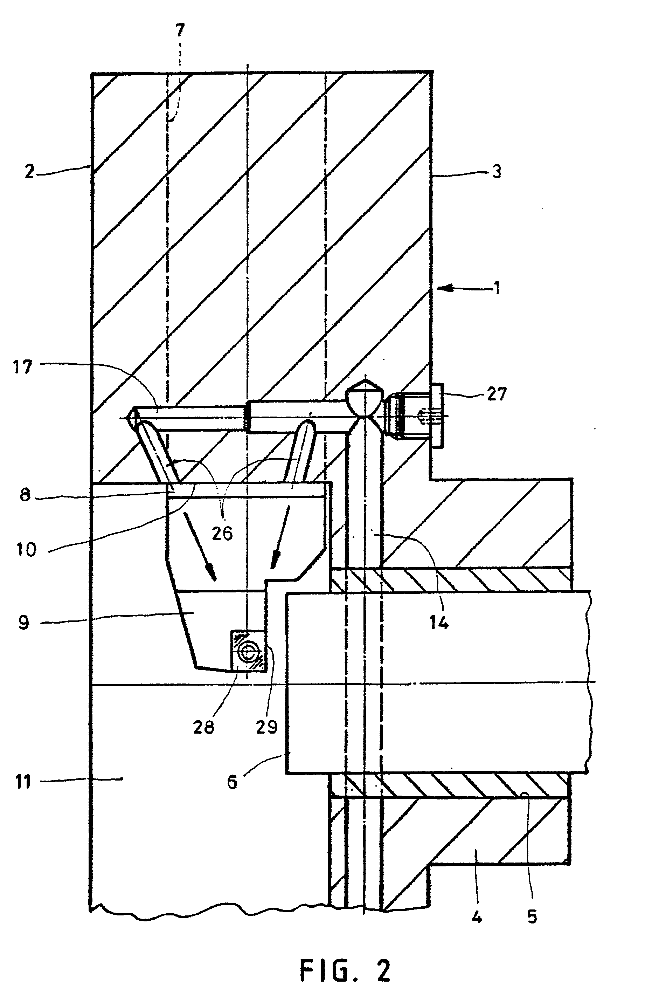

Le support représenté est monté sur un tour automatique qui comprend une poupée (non représentée) destinée à entraîner une barre de matière en rotation dans le sens antihoraire dans la Fig. 1. Ce support est constitué par un bloc massif et rigide 1, qui est disposé devant la poupée. Vu dans la direction de cette dernière, le bloc 1 a la forme d'un double trapèze. Ses larges faces, antérieure 2 et postérieure 3, sont planes, parallèles entre elles et perpendiculaires à l'axe longitudinal du tour. Un téton 4 fait saillie de la face 3 (Fig. 2). Ce téton 4 présente un alésage 5 dans lequel est monté un canon de guidage 6, qui peut être fixe ou tournant.

Cinq alésages 7 sont formés dans le bloc 1. Leurs axes sont des rayons situés dans un plan perpendiculaire à l'axe du canon 6. Des coulisseaux cylindriques 8, portant chacun un outil 9, sont ajustés dans les alésages 7 de façon à pouvoir coulisser librement mais sans jeu dans ceux-ci. La position des alésages 7 dans le bloc 1 est choisie de façon que les arêtes de coupe des outils 9 soient aussi près que possible du canon 6.

Les outils 9 et le canon 6 débouchent dans une creusure circulaire 10 formée dans la face 2 du bloc 1. Un canal d'évacuation 11 des copeaux est également formé dans la face 2 du bloc 1, à partir de la creusure 10.

Le bloc 1 peut être fixe par rapport au bâti du tour. Dans ce cas, la poupée du tour sera mobile de façon à faire avancer la barre de matière à travers le canon 6 tout au long de l'usinage d'une pièce à l'extrémité de cette barre. Le bloc 1 peut toutefois aussi être monté sur un chariot mobile le long de l'axe du tour, portant le réservoir du liquide d'arrosage. La poupée de ce dernier est alors fixe. Dans ce dernier cas, même un léger jeu du dit chariot dans sa coulisse ne compromet pas la précision du tour, car un tel jeu ne modifie pas la distance des outils 9 à l'axe du canon 6, qui est garantie par la rigidité du bloc 1.

La place de travail du tour, qui se trouve à l'intérieur de la creusure 10, autour de la pièce en cours d'usinage, est arrosée par un liquide, qui peut être de l'huile ou de l'eau savonneuse, par exemple, afin de refroidir la pièce et surtout chacun des outils 9 qui est en travail. Plus sévères seront les conditions de travail de ces outils, plus intense devra être le refroidissement, c'est-à-dire l'arrosage de la place de travail du tour.

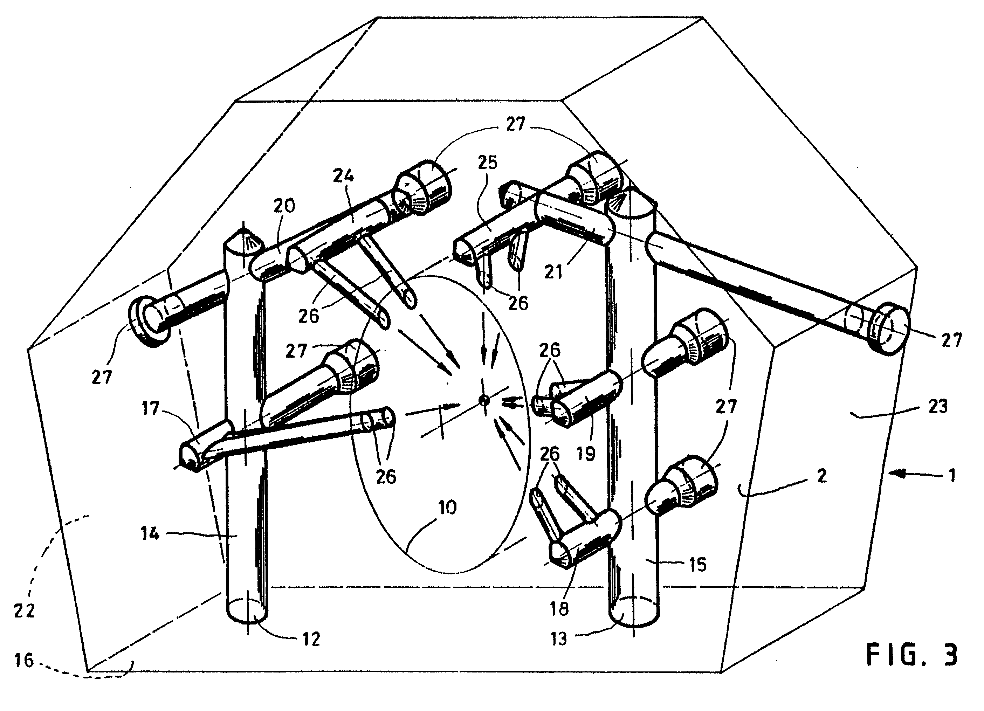

Le liquide d'arrosage est amené sous pression à partir d'un réservoir (non représenté) par des moyens conventionnels (non représentés) jusqu'à des orifices d'entrée 12, 13 dans le bloc 1 (Fig. 3). A partir de là, il est conduit jusqu'à la place de travail du tour à travers un ensemble de canaux dont chacun est constitué par une forure pratiquée dans le bloc 1.

A partir des orifices 12, 13, le liquide d'arrosage entre d'abord dans des canaux 14, 15, qui sont constitués par des forures verticales pratiquées dans le bloc 1 à partir de sa base 16. Le canal 14 communique avec un canal 17 et le canal 15 successivement avec deux canaux 18, 19. Ces canaux 17, 18, 19 sont constitués par des forures pratiquées dans le bloc 1 à partir de sa face 3, dans des directions parallèles à l'axe du canon 6. Les canaux 17, 18, 19 sont donc horizontaux. Chaque canal 14, 15, communique encore avec un canal oblique, respectivement 20, 21. Ces canaux 20, 21 sont constitués par des forures pratiquées dans le bloc 1 à partir de ses faces latérales 22, 23, perpendiculairement à ces dernières. Chaque canal oblique 20, 21 communique à son tour avec un canal, respectivement 24, 25, qui est en tout point semblable aux canaux 17, 18, 19. Enfin, chacun des canaux horizontaux 17, 18, 19 et 24, 25 communique avec un couple de canaux de sortie 26. Ces derniers sont constitués par des forures pratiquées dans le bloc 1 à partir de la paroi latérale de la creusure 10. La Fig. 3 montre que les canaux 26 sont forés dans des directions légèrement obliques, mais dirigés vers l'axe du canon 6, c'est-à-dire contre la pièce en travail. Les entrées des forures, qui constituent les canaux horizontaux 17, 18, 19 et 24, 25 ainsi que les canaux obliques 20, 21, sont obturées de façon étanche par des bouchons 27.

Pour effectuer un travail rapide dans les meilleures conditions, les outils 9 sont munis à leur extrémité de plaquettes vissées 28, comme on le voit dans la Fig. 2. Les plaquettes 28 sont faites en un matériau très dur et particulièrement résistant, bien connu des hommes du métier, et elles portent l'arête de coupe 29 de l'outil. En cas d'usure, un outil 9 n'est pas affûté; sa plaquette 28, dont l'arête de coupe 29 serait émoussée ou ébréchée, est remplacée par une nouvelle.

Par rapport au sens de rotation (antihoraire dans les Fig. 1 et 3) imprimé à la barre de matière en travail par la poupée du tour, chacun des canaux horizontaux 17 à 19 et 24, 25 est foré dans le bloc 1 devant l'alésage 7 guidant le coulisseau 8 de chacun des outils 9 (Fig. 1). A chaque outil 9 est ainsi associée une conduite du liquide d'arrosage qui aboutit à l'un des canaux horizontaux 17 à 19 et 24, 25. Les deux canaux de sortie 26 de chacune de ces conduites convergent, en outre, sur la plaquette 28 — et plus particulièrement sur l'arête de coupe 29 — de celui des outils 9 auquel cette conduite est associée, mais cela, bien sûr, seulement lorsque cet outil est en travail.

Plusieurs modifications du dispositif décrit sont évidemment possibles. Ainsi, dans le cas où la poupée entraînerait la barre de matière en travail dans le sens horaire en Fig. 1 et 3, les plaquettes 28 devraient se trouver de l'autre côté des outils 9, le canal 18 serait supprimé et un autre canal horizontal devrait être foré dans le bloc 1, de façon à communiquer avec le canal 14 à la même hauteur que le canal 18 communique avec le canal 15. D'autre part, si un arrosage nettement moins intense, que celui assuré par le dispositif décrit, devait suffire, les canaux horizontaux pourraient ne communiquer chacun qu'avec un seul canal de sortie. Dans certains cas, un nombre encore inférieur de canaux de sortie pourrait déjà donner satisfaction, pourvu que le dispositif d'arrosage n'encombre en aucune façon la zone du tour occupée par les outils, que la direction du ou des jets du liquide d'arrosage soit rigoureusement stable et que la masse et l'intensité du liquide projeté dans la creusure 10 assurent l'évacuation de tous les copeaux par le canal 11.

Pour éviter des canaux de trop grand diamètre à l'entée du bloc 1, il est indiqué de limiter à trois le nombre des embranchements à partir d'un même canal d'entrée dans le bloc 1. De plus, pour réduire le nombre des canaux à forer dans le bloc 1, il est indiqué de prévoir un canal d'entrée dans le bloc 1 de chaque côté de l'axe du canon 6.

Le volume du liquide d'arrosage projeté pendant toute la durée de travail du tour par les canaux 26 ne constitue pas une perte; ce liquide est recueilli, filtré puis renvoyé dans le réservoir duquel il était sorti.

## Revendications

1. Support des outils (9) d'un tour automatique, ayant la forme d'un bloc (1) solide et rigide, présentant, d'une part, un alésage dans lequel est fixé un canon de guidage (6) pour une barre de matière, et, d'autre part, des alésages (7) disposés en éventail pour guider perpendiculairement à l'axe du canon de guidage (6) des coulisseaux cylindriques (8) auxquels sont fixés des outils (9) afin d'usiner des pièces à l'extrémité de la barre de matière, et comprenant un dispositif d'arrosage de la place de travail des outils, caractérisé

   — en ce que le dispositif d'arrosage présente au moins une conduite ramifiée (14, 17, 20, 24, 26) pour le liquide d'arrosage,

— en ce que chaque conduite (14, 17, 20, 24, 26) s'étend tout entière dans la masse du bloc (1), à partir d'un orifice d'entrée (12) jusqu'à des sorties (26), qui dirigent des jets du liquide d'arrosage vers la place de travail des outils (9)

— et en ce que chaque conduite (14, 17, 20, 24, 26) est composée d'une succession de canaux dont chacun est constitué par une forure partant d'une face externe du bloc (1).

2. Support selon la revendication 1, caractérisé en ce qu'à chaque outil (9) du tour correspond au moins une ramification (26) d'une conduite (14, 17, 20, 24; 15, 18, 19, 21, 25) qui projette un jet de liquide d'arrosage vers sa place de travail.

3. Support selon la revendication 2, caractérisé en ce qu'à chaque outil (9) du tour sont associées deux ramifications (26) qui dirigent des jets convergents de liquide d'arrosage contre la pièce en travail et la partie (28) munie de l'arête de coupe (29) de celui des outils (9) qui est en travail.

4. Support selon la revendication 3, caractérisé en ce que les deux ramifications (26) associées à un outil (9) du tour sont embranchées sur un canal (17–19, 24, 25) parallèle à l'axe du canon de guidage (6) et foré dans le bloc (1), devant chacun des dits alésages (7) par rapport au sens de rotation imprimé par le tour à la barre de matière en travail.

5. Support selon la revendication 4, caractérisé

— en ce qu'un même canal d'entrée (14, 15) dans le dit bloc (1) alimente un groupe d'au plus trois canaux (17–19, 24, 25) parallèles à l'axe du canon de guidage

— et en ce que les canaux d'entrée (14, 15) dans le dit bloc sont constitués par des forures verticales.

## Claims

1. Support of the tools (9) of an automatic lathe, having the shape of a solid and rigid block (1) provided, on the one hand, with a boring in which a guiding bush (6) is fixed for a bar of stock, and, on the other hand, with fan-wise arranged borings (7) to guide, perpendicularly to the axis of the guiding bush (6), cylindrical sliders (8) to which tools (9) are fixed to machine workpieces at the end of the bar of stock, and comprising an arrangement sprinkling the working place of the tools, characterized

— in that the sprinkling arrangement comprises at least one ramified duct (14, 17, 20, 24, 26) for the liquid to be sprinkled,

— in that each duct (14, 17, 20, 24, 26) wholly extends within the mass of block (1) from an inlet opening (12) up to outlets (26) directing streams of the liquid to be sprinkled toward the working place of the tools (9)

— and in that each duct (14, 17, 20, 24, 26) consists of a succession of conduits, each of which is constituted by a boring starting from an outer face of block (1).

2. Support according to claim 1, characterized in that to every tool (9) of the lathe corresponds at least one ramification (26) of a duct (14, 17, 20, 24; 15, 18, 19, 21, 25) which throws a stream of the liquid to be sprinkled toward its working place.

3. Support according to claim 2, characterized in that with every tool (9) of the lathe are associated two ramifications (26) which direct converging streams of the liquid to be sprinkled against the piece being worked upon and the part (28) comprising the cutting edge (29) of the tool (9) which is in working position.

4. Support according to claim 3, characterized in that the two ramifications (26) associated with a tool (9) of the lathe are branched off from a conduit (17–19, 24, 25) parallel to the axis of the guiding bush (6) and bored in block (1) in front of each of said borings (7) with respect to the direction of the rotation imparted by the lathe to the bar of stock being worked upon.

5. Support according to claim 4, characterized

— in that one and the same inlet conduit (14, 15) in said block (1) feeds a group of at most three conduits (17–19, 24, 25) being parallel to the axis of the guiding bush

— and in that the inlet conduits (14, 15) in said block are constituted by vertical borings.

## Patentansprüche

1. Support für die Werkzeuge (9) einer automatischen Drehmaschine, der die Form eines festen und starren Blocks (1) besitzt und einerseits eine Bohrung, worin eine Führungsbuchse (6) für eine Werkstoffstange befestigt ist, und, anderseits, fächerförmig angeordnete Bohrungen (7) aufweist, die zur Führung, senkrecht zur Achse der Führungsbuchse (6), von zylindrischen Gleitklötzen (8) mit daran befestigten Werkzeugen (9) zur Bearbeitung von Werkstücken am Ende der Werkstoffstange dienen, und der ferner eine Spritzeinrichtung des Arbeitsplatzes der Werkzeuge umfaßt, dadurch gekennzeichnet,

— daß die Spritzeinrichtung mindestens eine verzweigte Leitung (14, 17, 20, 24, 26) für die Spritzflüßigkeit aufweist,

— daß sich jede Leitung (14, 17, 20, 24, 26) völlig innerhalb der Masse des Blocks (1) von einer Eintrittsöffnung (12) bis zu Austritten (26) erstreckt, die Ströme der Spritzflüßigkeit gegen den Arbeitsplatz der Werkzeuge (9) richten

— und daß jede Leitung (14, 17, 20, 24, 26) aus einer Reihenfolge von Kanälen zusammengesetzt ist, wovon jeder aus einer von einer äußeren Fläche des Blocks (1) startenden Bohrung besteht.

2. Support nach Anspruch 1, dadurch gekennzeichnet, daß jedem Werkzeug (9) der Drehmaschine mindestens eine Verzweigung (26) einer Leitung (14, 17, 20, 24; 15, 18, 19, 21, 25) entspricht, die einen Strom der Spritzflüßigkeit gegen seinen Arbeitsplatz schleudert.

3. Support nach Anspruch 2, dadurch gekennzeichnet, daß jedem Werkzeug (9) der Drehmaschine zwei Verzweigungen zugeordnet sind, die konvergierende Ströme der Spritzflüßigkeit gegen den Arbeitsplatz und den mit der Schneidkante (29) versehenen Teil (28) desjenigen der Werkzeuge (9) richten, welches sich in Arbeitsstellung befindet.

4. Support nach Anspruch 3, dadurch gekennzeichnet, daß die zwei einem Werkzeug (9) der Drehmaschine zugeordneten Verzweigungen (26) an einem parallel zur Achse der Führungsbuchse (6) liegenden Kanal (17–19, 24, 25) angeschlossen sind, der in den Block (1) vor jeder der genannten Bohrungen (7) bezüglich die durch die Drehmaschine der Werkstoffstange mitgeteilte Drehrichtung gebohrt ist.

5. Support nach Anspruch 4, dadurch gekennzeichnet

— daß ein und derselbe Eintrittskanal (14, 15) in den Block (1) eine Gruppe von höchstens drei parallel zur Achse der Führungsbuchse liegenden Kanälen (17–19, 24, 25) speist

— und daß die Eintrittskanäle (14, 15) in den genannten Block aus vertikalen Bohrungen bestehen.

FIG. 1

FIG. 2

FIG. 3

EP 0 211 128 B1